(19) **Europäisches Patentamt / European Patent Office / Office européen des brevets**

(11) **EP 2 362 596 B1**

(12) **EUROPEAN PATENT SPECIFICATION**

(45) Date of publication and mention of the grant of the patent:
**24.08.2016 Bulletin 2016/34**

(51) Int Cl.:
*H04L 25/02* (2006.01)      *H04L 5/00* (2006.01)
*H04L 27/26* (2006.01)

(21) Application number: **09829972.0**

(86) International application number:
**PCT/CN2009/073740**

(22) Date of filing: **03.09.2009**

(87) International publication number:
**WO 2010/063188 (10.06.2010 Gazette 2010/23)**

(54) **METHOD AND DEVICE FOR FILTERING ORTHOGONAL FREQUENCY DIVISION MULTIPLEXING CHANNEL ESTIMATE RESULT**

VERFAHREN UND VORRICHTUNG ZUR FILTERUNG VON OFDM-KANALSCHÄTZUNGSERGEBNISSEN

PROCÉDÉ ET DISPOSITIF POUR FILTRER UN RÉSULTAT D'ESTIMATION DE CANAL DE MULTIPLEXAGE PAR RÉPARTITION ORTHOGONALE DE LA FRÉQUENCE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **05.12.2008 CN 200810178929**

(43) Date of publication of application:
**31.08.2011 Bulletin 2011/35**

(73) Proprietor: **ZTE Corporation
Shenzhen, Guangdong 518057 (CN)**

(72) Inventors:
- **QIU, Ning
  Guangdong 518057 (CN)**
- **LI, Qiang
  Guangdong 518057 (CN)**
- **CHEN, Li
  Guangdong 518057 (CN)**

- **CAO, Nanshan
  Guangdong 518057 (CN)**
- **ZHANG, Tao
  Guangdong 518057 (CN)**
- **YOU, Yueyi
  Guangdong 518057 (CN)**

(74) Representative: **Dr. Weitzel & Partner
Patent- und Rechtsanwälte mbB
Friedenstrasse 10
89522 Heidenheim (DE)**

(56) References cited:
| | |
|---|---|
| WO-A1-2007/059522 | CN-A- 1 437 338 |
| CN-A- 101 227 438 | GB-A- 2 449 554 |
| JP-A- 2008 054 193 | US-A1- 2003 165 131 |
| US-A1- 2006 203 932 | US-A1- 2006 251 198 |

**Description**

**Filed of the Invention**

The present invention relates to channel estimation field in communication and information technologies, in particular to a method and a device for filtering a channel estimation result in the Orthogonal Frequency Division Multiplexing (OFDM).

**Background of the Invention**

The State Administration of Radio Film and Television (SARFT) issued the China Mobile Multimedia Broadcasting Trade Standard in October, 2006, and determined to adopt the mobile television reception standard STiMi which is independently researched and developed by China. The standard has put into effect since November 1, 2006. The China Mobile Multimedia Broadcasting (CMMB) is the first system which is independently researched and developed by China facing a plurality of mobile terminals such as mobile phone, personal digital assistant (PDA), MP3, MP4, digital camera, notebook computer and so on, utilizes a satellite signal on the S band to realize universal coverage and nationwide roaming, and supports 25 sets of television programs and 30 sets of broadcasting programs. The CMMB stipulates the channel coding, modulation and the frame structure of the transmission signal in the broadcast channel of the mobile multimedia broadcasting system in the range of broadcasting service frequencies. The standard is applicable to the broadcasting service frequencies within the frequency range from 30MHz to 3000MHz, and can realize the nationwide roaming by the satellite and/or the wireless broadcasting system on the ground which can transmit multimedia signals such as television, broadcasting, and data information and so on.

The CMMB standard adopts the orthogonal frequency division multiplexing (OFDM) technology which is a multicarrier modulation technology. The main principle of the OFDM is that: a channel is divided into a plurality of orthogonal sub channels, and high speed data is converted into low speed sub-data flows in parallel which can be modulated to each sub channel to be transmitted. Orthogonal signals can be separated at a receiving end by using related technologies, which can reduce the mutual interference among the sub channels. A signal bandwidth on each sub channel is less than the correlation bandwidth of the channel, so each sub channel can be regarded as flat fading, consequently the intersymbolic interference can be eliminated. Furthermore, the bandwidth of each sub channel is only a fraction of the original channel bandwidth, so that channel equalization is comparatively easy to realize. The OFDM has been used in many wireless system standards at present, such as European digital audio and digital video broadcasting system (DAB, DVB-T, DVB-H), 5GHz high data rate wireless LAN (IEEE802.11a, HiperLan2, MMAC) system and so on.

The data subcarrier is multiple connected with scattered pilot and continuous pilot during the formation of frequency domain OFDM symbol of the CMMB system to form the OFDM frequency domain symbol. Each OFDM comprises Nv=3076 effective subcarriers.

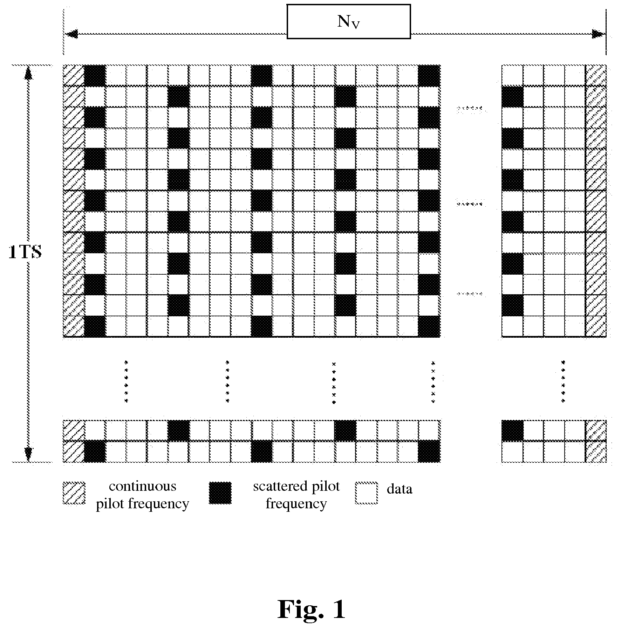

The No. i effective subcarrier on the No. n OFDM symbol of each time slot is denoted as Xn(i), i=0, 1..., Nv-1; $0 \leq n \leq 52$. The effective subcarriers of the OFDM symbol are divided into data subcarriers, scattered pilots and continuous pilots as shown in Fig.1.

In the above, M number of scattered pilots transmit known symbol 1+0j. The value selection rules of the serial number m of the effective subcarrier corresponding to the scattered pilot in the No. n OFDM symbol of each time slot are as follows:

*if* mod(n,2) == 0

$$m = \begin{cases} 8p+1, & p = 0,1,2,\cdots 191 \\ 8p+3, & p = 192,193,194,\cdots 383 \end{cases}$$

*if* mod($n$,2) ==1

$$m = \begin{cases} 8p+5, & p = 0,1,2,\cdots 191 \\ 8p+7, & p = 192,193,194,\cdots 383 \end{cases}$$

A realization principle of a method for filtering a channel estimation in a frequency domain in prior art is as follows: a receiver receives time domain symbols transmitted in a wireless multi-path fading channel, performs FFT transformation to obtain frequency domain symbols, samples the M number of scattered pilot symbols in the frequency domain symbols, estimates the time domain pilot, takes the channel estimation result of the time domain frequency domain carrier as pilot data, and fills zero in the positions of the other subcarriers; then the N number of data after being filled is filtered by a filter with fixed tap coefficients. By using a frequency domain filter of a channel estimation result of a data symbol with fixed tap coefficients in the frequency domain, signal vector of the subcarrier can be averaged to eliminate noises, so that the precision of channel estimation is improved.

The above-mentioned principle of the method for filtering the channel estimation in the frequency domain can also be realized in the following mode: the receiver receives the time domain symbols transmitted in the wireless multi-path fading channel, performs FFT transformation to obtain the frequency domain symbols, samples the M number of scattered pilot symbols in the frequency domain symbols, estimates the time domain pilot, takes the channel estimation result of the time domain frequency domain carrier as the pilot data, and utilizes the linear interpolation technology or the high order interpolation technology to infer out the frequency filter coefficients of the channel estimation result of the data symbol corresponding to the channel of the data subcarrier except the positions of the scattered pilots. The method in the prior art has simple calculation and the least realization complexity, but also has poor performance.

The principle of another method for filtering the channel estimation in the frequency domain in prior art is as follows: the receiver receives the time domain symbols transmitted in a wireless multi-path fading channel, performs FFT transformation to obtain the frequency domain symbols, samples the M number of scattered pilot symbols in the frequency domain symbols, estimates the time domain pilot, takes the channel estimation result of the time domain frequency domain carrier as the pilot data, and fills zero in the positions of theother subcarriers; then the N number of data after being filled is input a frequency domain Wiener filter to obtain the frequency domain filter coefficients of the channel estimation result of the data symbol. The method in the prior art has optimum performance. But the autocorrelation matrix and crosscorrelation vector of the signal require to be estimated in order to calculate the coefficients of the Wiener filter, and the autocorrelation matrix requires performing matrix inversion calculation, the calculation is great, so as to influence the practical application severely

The frequency domain filters of the channel estimation result of the data symbol mentioned above in the prior art all have the problems that the realization of filtering the channel estimation result is complex or the performance is poor. Therefore, a frequency domain filter of a channel estimation result of a data symbol with simple realization and better performance is required.

The related document (US 2006/203932 A1) provides pilot transmission and channel estimation for a communication system utilizing frequency division multiplexing; the related document (US 2006/251198 A1) discloses a method of signal processing according to an embodiment includes estimating a response of a transmission channel during a symbol period; the related document (GB 2449554A) discloses reception quality measuring apparatus and reception quality measuring method; and the related document (GB 2449554A) discloses reception quality measuring apparatus and reception quality measuring method; and the related document (US 2003/165131 A1) discloses a code division multiple access (CDMA) system and methods for processing symbol blocks of a spread signal in both frequency and time domains. However, the above mentioned problem still remains unsolved by the above mentioned documents.

## Summary of the Invention

The present invention mainly aims to provide a method for filtering a channel estimation in the frequency domain to solve the problems that the realization of filtering the channel estimation result is complex or the performance is poor in the prior art.

In order to solve the above-mentioned problems, the present invention provides a technical solution according to method claim 1 and apparatus claim 7.

The technical solution of the present invention firstly utilizes the frequency domain channel impulse response sequences obtained according to the channel estimation result of the frequency domain of the synchronous symbol to adjust the minimum mean square adaptive filter coefficients, and then obtains the frequency domain filter coefficients of the channel estimation result of the data symbol according to the adjusted coefficients. The frequency domain filter of the channel estimation result of the data symbol obtained in this way can effectively filter the noise components of the channel estimation result of the frequency domain of the OFDM symbol. In addition, during the adjustment calculation of the minimum mean square adaptive filter coefficients, the calculation of the autocorrelation matrix and the crosscorrelation vector of the signal do not be required, and matrix inversion calculation of the autocorrelation matrix does not be required either. Therefore, the frequency domain filter of the OFDM channel estimation result obtained according to the technical solution of the present invention has less calculation, simpler realization and better filtering performance.

Other characteristics and advantages of the present invention will be described in the following specification, and will be apparent partly from the specification and will be understood by implementing the present invention. The objects and other advantages of the present invention can be realized and obtained by the specified structure of the specification, claims, and the drawings.

**Brief Description of the Drawings**

The drawings herein are used to provide further understanding of the present invention and form a part of the specification, which are used to explain the present invention with embodiments of the present invention rather than unduly limit the present invention. In the accompanying drawings:

Fig.1 is a schematic diagram of an assigning mode in which the effective subcarriers of an OFDM symbol are assigned into data subcarriers, scattered pilots and continuous pibts.

Fig.2 is a flow chart of a method in an embodiment of the present invention

Fig.3 is a schematic diagram of intercepting sample points in a channel time domain synchronous symbol in an embodiment of the present invention.

Fig.4 is a structural schematic diagram of a FIR filter.

Fig.5 is a flow chart of steps of an iterative calculation in an embodiment of the present invention.

Fig.6 is a structural schematic diagram of a device in an embodiment of the present invention.

Fig.7 is comparison schematic diagram of technical effect between a technical solution of an embodiment of the present invention and a technical solution of the prior art.

**Detailed Description of the Embodiments**

Function Summary

In the embodiments of the present invention, by utilizing a frequency domain channel impulse response sequences obtained according to a channel estimation result in the frequency domain of the synchronous symbol to adjust a minimum mean square adaptive filter coefficients, and then obtains a frequency domain filter coefficients of the channel estimation result of the data symbol according to the adjusted coefficients. In addition, during the adjustment calculation of the minimum mean square adaptive filter coefficients, the calculation of the autocorrelation matrix and the crosscorrelation vector of the signal do not be required, and matrix inversion calculation of the autocorrelation matrix does not be required either, solves the problems that the calculation of the frequency domain filter in the prior art is great and the realization is complex.

In order to further understand the present invention, specific implementation modes and embodiments of a method and a device for filtering a channel estimation result in the OFDM are described in detail hereinafter in connection with the embodiments and the drawings of the present invention. What should be understood is that the preferable embodiments described herein are given to illustrate and explain the present invention rather than limit the present invention.

If un-conflictive, the embodiments of the present invention and the features in the embodiments can be inter-combined with each other.

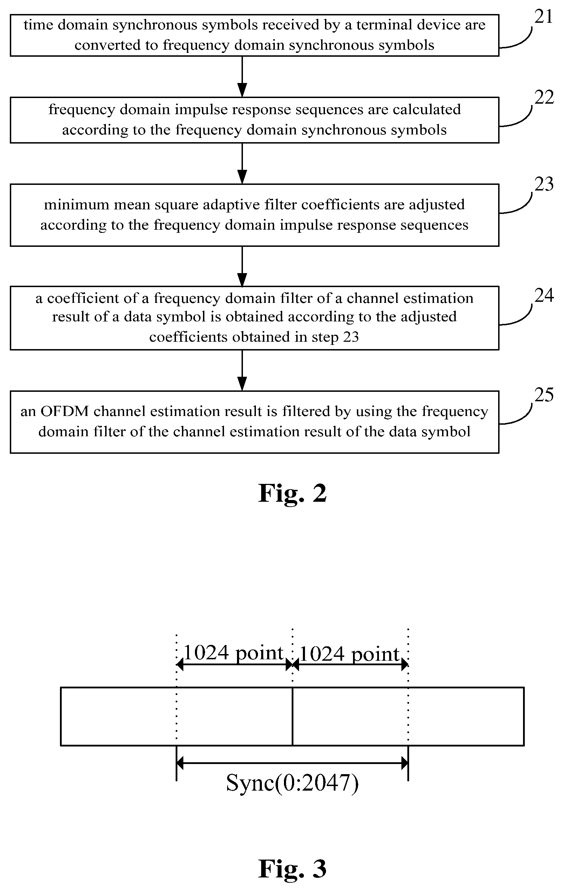

In order to realize the filtering of the channel estimation result of the OFDM simpler and obtain better filtering performance, the channel estimation result of the OFDM is processed according to the flow shown in Fig.2 in an embodiment of the present invention The process comprises the specific steps as follows (step 21-step 25).

Step 21, time domain synchronous symbols received by a terminal device are converted to frequency domain synchronous symbols.

Step 22, frequency domain impulse response sequences are calculated according to the frequency domain synchronous symbols.

Step 23, minimum mean square adaptive filter coefficients are adjusted according to the frequency domain impulse response sequences.

Step 24, a coefficient of a frequency domain filter of a channel estimation result of a data symbol is obtained according to the adjusted coefficients obtained in step 23.

Step 25, an OFDM channel estimation result is filtered by using the frequency domain filter of the channel estimation result of the data symbol.

The above-mentioned steps will be described in detail hereinafter.

The embodiments of the present invention will be described by taking a frame structure stipulated in the CMMB system as an example. According to the stipulation of the CMMB, the synchronous symbol locates at the starting location of each time slot. To be specific in step 21, firstly data is sampled from the time domain synchronous symbols received by the terminal device, and then the sampled data performs fast Fourier transform (FFT) to obtain the frequency domain synchronous symbols.

When the data is sampled from the time domain synchronous symbols received by the terminal device, 2048 sample points can be firstly intercepted from the time domain synchronous symbols received by the terminal device as the two 1024 sample points shown in Fig.3. Besides the data interception mode as shown in Fig.3, data at the other positions in Fig.3 can also be intercepted. In the following data processing process, the solution of data interception at the other positions as shown in Fig.3 requires using an initialization PN sequence which is different from the PN sequence of the embodiments of the present invention, while the other processes are the same to the embodiments of the present invention completely. The advantages of the sample point interception solution of the embodiments of the present invention exist in that, if timing offset exists, the intercepted data will not be contaminated except the synchronous symbols under the circumstance that the timing offset does not exceed positive 1024 or negative 1024 points. While for the other data interception solutions, as long as a certain direction of timing offset exists, the intercepted data will be contaminated by the other data besides the synchronous symbols.

The intermediate part of the time domain synchronous symbol, obtained by intercepting the data according to the mode as shown in Fig.3, is Sync (0:2047). Then the data 0, 2, 4..., 2046 is sampled in dot-interlaced mode from 0 point in the Sync (0:2047) and is re-combined into SyncD (0:1023) =Sync (0, 2, 4..., 2046). Herein, the dot-interlaced sampled 1024 values are used to perform frequency domain conversion. The frequency domain conversion of the dot-interlaced sampled points reduces the highest frequency of a spectrum. In the following step 23, the spectrum component which is half less than the highest frequency is selected to perform calculation, in such a way the calculation can be decreased properly. After obtaining the SyncD (0:1023), the FFT can be performed on the SyncD (0:1023) to obtain the frequency domain synchronous symbol. The calculation can be performed according to the following formula:

$$SyncFreqD(k) = \frac{1}{2048}\sum_{i=0}^{1023}(SyncD(i)*e^{-j\frac{2\pi ki}{1024}})$$

After obtaining the frequency domain synchronous symbol, the frequency domain impulse response sequence will be calculated sequentially, i.e. the step 22. In this case, for the frequency domain synchronous symbol obtained in the step 21, the low frequency 256 points component is firstly intercepted from the frequency domain synchronous symbol except direct-current frequency component to construct a sequence FreqSyncDL(0:255)=FreqSyncD(1:256). Since spectral aliasing exists at the position half higher than the lowest frequency, data more than 256 points can not be used. Furthermore, a part of the low frequency 256 points can also be used as training sequence, but in this case, not all the data in the frequency domain synchronous symbol is used. Since longer training sequence length is favorable to reduce residual deviation of a filtering result and improve the performance of tracking variation of channels, the step 22 in the embodiment of the present selects the low frequency 256 points in the frequency domain synchronous symbol. After obtaining the data of the 256 points, the frequency domain impulse response sequence can be calculated. In the embodiment of the present invention, the data is intercepted according to the mode as shown in Fig.3. Corresponding to the data interception mode as shown in Fig.3, in the step 22, the FreqsyncDL(0:255) obtained by intercepting the low frequency 256 points component is multiplied by the PN sequence as shown in table 1, i.e., performing the calculation according to formula SyncCIR(0:255)=FreqSyncDL(0:255)·Pn(0:255), to obtain corresponding frequency domain impulse response sequence SyncCIR(0:255). If hardware fixed-point processing realization requirement requires to be met, in the embodiment of the present invention, SyncD (0:1023) can shift left for four bits and perform saturation processing in the step 21, and SyncCIR (0:255) can shift left for four bits and perform saturation processing in the step 22.

Table 1

| Serial number | Value selection |
| --- | --- |
| 0-63 | DF1E C611 6036 B727 |
| 64-127 | DDBF C283 A50C 8D7D |
| 128-191 | BBC0 32B5 A6CD 1582 |
| 192-255 | DB9C 1723 DF3E D219 |

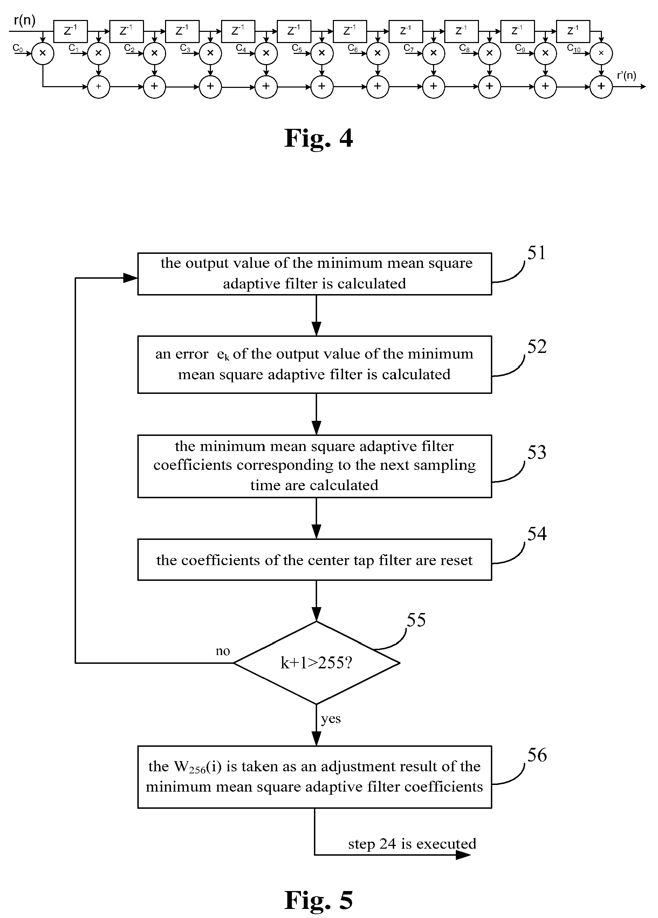

After obtaining the frequency domain impulse response sequenceSyncCIR (0:255) in the step 22, the step 23 will be executed sequentially. The sequence SyncCIR (0:255) is used as a training sequence of minimum mean square adaptive filter coefficients. The minimum mean square adaptive filter coefficients are adjusted by using an iterative calculation method to obtain a coefficients sequence $W_{256}(i)$ of the minimum mean square adaptive filter. In the present step, it is set that Train (0:255) =SyncCIR (0:255), and then the iterative calculation is performed corresponding to each sampling time of the SyncCIR (0:255). To be specific, output values of the minimum mean square adaptive filter is performed the iterative calculation according to the order of the frequency domain impulse response sequence. After each time of the iterative calculation, the minimum mean square adaptive filter coefficients in the iterative calculation next time are adjusted according to the output value of the minimum mean square adaptive filter calculated in the iterative calculation this time. Lastly, the value obtained by adjusting the minimum mean square adaptive filter coefficients in the iterative calculation is output. The output value can be the minimum mean square adaptive filter coefficients calculated in the last iterative calculation, and the frequency domain filter of the channel estimation result of the data symbol obtained accordingly has good filtering performance. The specific steps of the iterative calculation will be described in detail in connection with Fig.5 after the description of the steps shown in Fig.2.

After obtaining the minimum mean square adaptive filter coefficients, in the step 24, in accordance with coefficient requirement of the frequency domain filter of the channel estimation result of the data symbol, the coefficients of the frequency domain filter of the channel estimation result of the data symbol are obtained according to the minimum mean square adaptive filter coefficients. In the embodiments of the present invention, the finite impulse response (FIR) filter is used. The FIR filter comprises a delayer, a multiplier, a summator and filter coefficients and so on. As shown in Fig.4, r (n) is an input sequence, and the r' (n) is an output sequence. The circle with mark $Z^{-1}$ is the delayer; the circle with mark x represents the multiplier; the circle with mark + is the summator; and C0-C10 are the filter coefficients and there are 11 coefficients in the Fig.4. According to the structure of the FIR filter as shown in Fig.4, in the embodiment of the present invention, the FIR filter coefficients are obtained according to the minimum mean square adaptive filter coefficients obtained in the step 23. To be specific, the process comprises the following steps: interpolation is firstly performed to the coefficients sequence obtained in the step 23, specifically, the $W_{256}$ (i) obtained in the step 23 is interposed with 0 with intervals to obtain Coeff (i). The interpolation can be performed according to the following formula:

$$Coeff(i) = \begin{cases} w(i/2) & i = 0,2,4,...,24 \\ 0 & i = else \end{cases}$$

; and then the Coeff (i) is truncated into 27 ranks by a half-band filter to calculate the FIR filter coefficients. The half-band filter with given ranks can be generated according to prior algorithm. The embodiment of the present invention selects a 20 ranks half-band filter used for converting the filter coefficients represented by floating point number into the filter coefficients represented by the fixed point number complement which is more favorable to realize hardware or software filter device. The Coeff (i) is performed calculation by the 20 ranks half-band filter, and the calculation is performed according to the following formula:

$$CoeffLp(k) = \sum_{i=0}^{20} LpFilter(i) \cdot Coeff(k+8-i)$$

, wherein k=0,1,2,...27. 16 bits fixed point represents the 20 ranks half-band filter coefficients in the present step is as shown in table 2.

Table 2

| Index | Coefficient | Index | Coefficient |
|-------|-------------|-------|-------------|
| 0 | 0 | 12 | 0 |
| 1 | 36 | 13 | -2555 |
| 2 | 0 | 14 | 0 |
| 3 | -234 | 15 | 858 |
| 4 | 0 | 16 | 0 |
| 5 | 858 | 17 | -234 |
| 6 | 0 | 18 | 0 |
| 7 | -2555 | 19 | 36 |
| 8 | 0 | 20 | 0 |
| 9 | 10084 | | |
| 10 | 16384 | | |
| 11 | 10084 | | |

After obtaining the CoeffLp (k), the step 25 will be executed, and the OFDM channel estimation result is filtered by using the FIR filter. For a FIR filter which has similar structure and only different coefficient numbers compared with the FIR filter as shown in Fig.4, the OFDM channel estimation result is input the FIR filter from the position where the r (n) locates in Fig.4, and the filter coefficients in the figure is replaced by theCoeffLp (k), then the filtering result of the FIR filter will be output from the position where the r' (n) locates. The subsequent channel estimation result of the frequency domain of time slot OFDM symbols will also be filtered by the FIR filter

The iterative steps in the step 23 will be described hereinafter in connection with Fig.5.

Step 51, the output value of the minimum mean square adaptive filter is calculated. In the present step, the calculation can be performed according the following formula: $\hat{n}_k = \sum_{i=0}^{12} w_k(i)Train(k-i+12)$, wherein, $w_k(i)$ is the minimum mean square adaptive filter coefficient, and $\hat{n}_k$ is the output value of the minimum mean square adaptive filter. At the beginning of the iteration calculation, the value of the k is 0.

Step 52, an error $e_k$ of the output value of the minimum mean square adaptive filter is calculated according to the following formula: $e_k = Train(k + 6) - \hat{n}_k$.

Step 53, the minimum mean square adaptive filter coefficients, which will be used in the iteration calculation next to the present iteration calculation, are calculated. That is to say, the minimum mean square adaptive filter coefficients corresponding to the next sampling time are calculated. To be specific, the minimum mean square adaptive filter coefficients corresponding to the next sampling time of the SyncCIR(0:255) are calculated according to the following formula: $w_{k+1}(i) = w_k(i) + e_k Train(k - i + 12)^*$, wherein, the sign * represents to perform conjugation calculation, i=0, 1, 2..., 12.

Step 54, the coefficients of the center tap filter are reset, namely $w_{k+1}(6) = 0$. There are 13 coefficients in the embodiment of the present invention, so the sequence of the center tap is 6. Generally, if m numbers of coefficients are used, the serial number of the center tap will be (m-1) / 2.

Step 55, it is judged whether the value of k+1 is more than 255, wherein if no, the step 51 is returned to perform the iteration calculation continuatively; if yes, the step 56 will be executed, the $W_{256}(i)$ is taken as an adjustment result of the minimum mean square adaptive filter coefficients; and then the step 24 in Fig.2 is executed.

The device in the embodiment of the present invention will be described hereinafter on the basis of the method in the embodiment of the present.

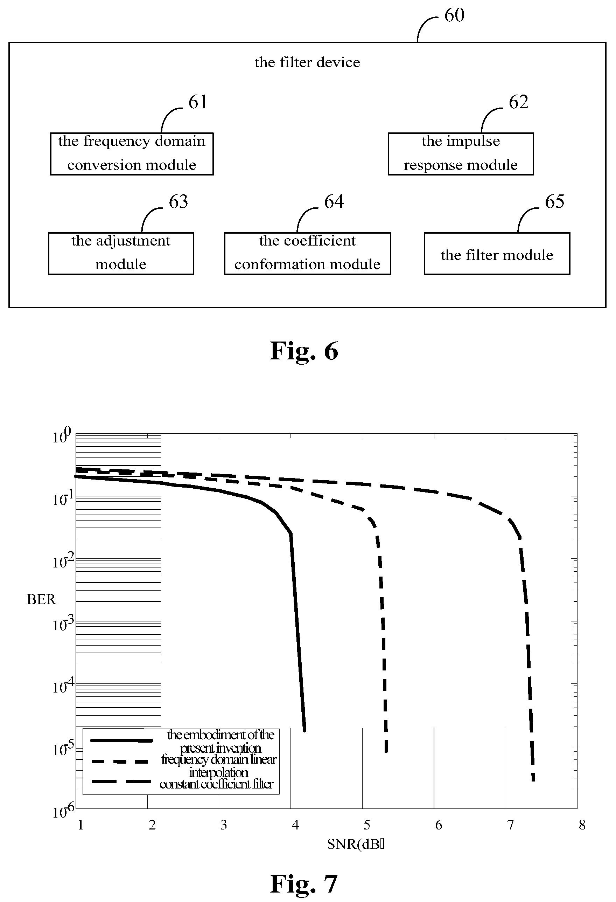

As shown in Fig.6, a filter device 60 in the embodiment of the present invention comprises a frequency domain conversion module 61, an impulse response module 62, an adjustment module 63, a coefficient conformation module 64 and a filter module 65. The frequency domain conversion module 61 is adapted to convert time domain synchronous symbols received by a terminal device to frequency domain synchronous symbols. The impulse response module 62 is adapted to calculate frequency domain impulse response sequences according to the frequency domain synchronous symbols. The adjustment module 63 is adapted to adjust minimum mean square adaptive filter coefficients according to the frequency domain impulse response sequences. The coefficient conformation module 64 is adapted to obtain a coefficient of a frequency domain filter of a channel estimation result of a data symbol according to the adjusted coefficients obtained from the adjustment module 63. The filter module 65 is adapted to use the frequency domain filter of the channel estimation result of the data symbol to filter an OFDM.

One structure of the frequency domain conversion module 61 comprises a sampling unit and a conversion unit. The sampling unit is adapted to sample data from the time domain synchronous symbols received by the terminal device. The conversion unit is adapted to perform fast Fourier transform (FFT) to the data sampled by the sampling unit to obtain the frequency domain synchronous symbols

One structure of the impulse response module 62 comprises an interception unit and an impulse response calculation unit. The interception unit is adapted to intercept low frequency points of the frequency domain synchronous symbols according to a pre-setting number to construct a low frequency sequence. The impulse response calculation unit is adapted to multiply the low frequency sequence by a frequency domain PN sequence whose position correspond to the low frequency sequence to obtain the frequency domain impulse response sequences.

One structure of the adjustment module 63 comprises an iteration calculation unit and a coefficient unit. The iteration calculation unit is adapted to iteratively calculate the minimum mean square adaptive filter coefficients according to the steps shown in Fig.5. The coefficient unit is adapted to output values obtained by adjusting the minimum mean square adaptive filter coefficients during the iteration calculation.

One structure of the iteration calculation unit comprises an output value calculation sub-unit, an error calculation sub-unit, a coefficient adjustment sub-unit and a coefficient setting sub-unit. The output value calculation sub-unit is adapted to calculate the output value of the minimum mean square adaptive filter. The error calculation sub-unit is adapted to calculate an error of the output value of the minimum mean square adaptive filter. The coefficient adjustment sub-unit is adapted to calculate the minimum mean square adaptive filter coefficients, which is calculated in the present iteration calculation and will be used in the next iteration calculation during the iteration calculation, according to the calculation result of the error calculation sub-unit. The coefficient setting sub-unit is adapted to set a value of the No. $\dfrac{j-1}{2}$ coefficient of the minimum mean square adaptive filter coefficients, which is calculated in the present iteration calculation and will be used in the next iteration calculation during the iteration calculation, as 0.

One structure of the coefficient conformation module 64 comprises an interpolation unit and a half-band filter unit. The interpolation unit is adapted to interpose a value 0 after each element in a sequence output by the adjustment module, and then output the sequence. The half-band filter unit is adapted to calculate the sequence output by the interpolation unit by using a half-band filter and truncate which to obtain coefficients of the frequency domain filter of the channel estimation result of the data symbol.

The performance comparison between the technical solution of the embodiment of the present invention and the prior art in the circumstance of two ranks strong path channel with time delay 40us expanded in the CMMB system is as shown in Fig.7. It can be concluded from Fig.7, comparing with the frequency domain linear interpolation and the constant coefficient in the prior art shown in the figure, the RS bit error rate of the filtering result of the filter obtained by the technical solution of the embodiment of the present invention is comparatively low.

The technical solution provided by the embodiments of the present invention utilizes the frequency domain channel impulse response sequences obtained according to the channel estimation result of the frequency domain of the synchronous symbol to adjust the minimum mean square adaptive filter coefficients, and then obtains the frequency domain filter coefficients of the channel estimation result of the data symbol according to the adjusted coefficients. The frequency domain filter of the channel estimation result of the data symbol obtained in this way can effectively filter the noise components of the channel estimation result of the frequency domain of the OFDM symbol. In addition, during the adjustment calculation of the minimum mean square adaptive filter coefficients, the iterative calculation adopted by the embodiments includes only hundreds of simple multiplication and addition. The calculation of the autocorrelation matrix and the crosscorrelation vector of the signal do not be required, and matrix inversion calculation of the autocorrelation matrix does not be required either. Therefore, the frequency domain filter of the OFDM channel estimation result obtained according to the technical solution of the present invention has less calculation, simpler realization and better filtering performance.

## Claims

1. A method for filtering a channel estimation result in orthogonal frequency division multiplexing, OFDM, comprising the following steps:

    converting time domain synchronous symbols received by a terminal device to frequency domain synchronous symbols;
    calculating frequency domain impulse response sequences according to the frequency domain synchronous symbols;
    adjusting minimum mean square adaptive filter coefficients according to the frequency domain impulse response sequences;
    obtaining a coefficient of a frequency domain filter of a channel estimation result of a data symbol according to the adjusted coefficients; and
    using the frequency domain filter of the channel estimation result of the data symbol to filter an OFDM channel estimation result;
    wherein the step of calculating the frequency domain impulse response sequences according to the frequency domain synchronous symbols comprises the following steps:

        intercepting low frequency points of the frequency domain synchronous symbols according to a pre-setting number to construct a low frequency sequence;
        multiplying the low frequency sequence by a frequency domain PN sequence of position corresponding to the low frequency sequence to obtain the frequency domain impulse response sequences;
        wherein low frequency is a spectrum component which is half less than the highest frequency.

2. The method according to Claim 1, **characterized in that** the step of converting the time domain synchronous symbols received by the terminal device to the frequency domain synchronous symbols comprises the following steps:

        sampling data from the time domain synchronous symbols received by the terminal device according to a pre-setting mode; and

performing fast Fourier transform, FFT, to a sequence constructed by the sampled data to obtain the frequency domain synchronous symbols.

3. The method according to Claim 1, **characterized in that** the step of adjusting the minimum mean square adaptive filter coefficients according to the frequency domain impulse response sequences comprises the following steps:

performing iterative calculation to an output value of the minimum mean square adaptive filter corresponding to each sampling time of the frequency domain impulse response sequences sequentially; and

the adjustment comprising adjusting the minimum mean square adaptive filter coefficients according to the result of the iterative calculation.

4. The method according to Claim 3, **characterized in that** each time of the iterative calculation comprises the following steps:

calculating the output value of the minimum mean square adaptive filter;

calculating an error of the output value of the minimum mean square adaptive filter;

calculating the minimum mean square adaptive filter coefficients, which is calculated in the present iteration calculation and will be used in the next iteration calculation during the iteration calculation, according to the error; and

setting a value of the No. $\dfrac{j-1}{2}$ coefficient of the minimum mean square adaptive filter coefficients, which is calculated in the present iteration calculation and will be used in the next iteration calculation during the iteration calculation, as 0.

5. The method according to Claim 4, **characterized in that**,

the step of calculating the output value of the minimum mean square adaptive filter comprises the step of calculating the output value $\hat{n}_k$ of the minimum mean square adaptive filter according to the following formula:

$$\hat{n}_k = \sum_{i=0}^{j} w_k(i) Train(k - i + 12);$$

wherein, the j is number of the minimum mean square adaptive filter coefficients; when k=0, $w_k(i)$ is a setting value of the minimum mean square adaptive filter coefficients, Train() is a training sequence of the minimum mean square adaptive filter coefficients, a value of Tain() is set the same with a value of the frequency domain impulse response sequences in corresponding position;

the step of calculating the error of the output value of the minimum mean square adaptive filter comprises the step of calculating the error $e_k$ according to the following formula:

$$e_k = Train(k + 6) - \hat{n}_k;$$

the step of calculating the minimum mean square adaptive filter coefficients, which is calculated in the present iteration calculation and will be used in the next iteration calculation during the iteration calculation, according to the error comprises performing the calculation using the following formula:

$$w_{k+1}(i) = w_k(i) + e_k Train(k - i + 12)^*;$$

wherein, $w_{k+1}(i)$ is the minimum mean square adaptive filter coefficients used in the next iteration calculation; Train(k - i + 12)* represents a conjugate value of Train(k - i + 12); and

the adjusted coefficients comprises the $w_k(i)$, wherein a value of the k equals to the length of the frequency domain impulse response sequences.

6. The method according to Claim 3, **characterized in that** the frequency domain filter of the channel estimation result of the data symbol comprises a finite impulse response, FIR, filter;

the step of obtaining the coefficients of the frequency domain filter of the channel estimation result of the data symbol according to the adjusted coefficients comprises the following steps:

interposing a value 0 after each element in a sequence constructed by the adjusted coefficients;
calculating the sequence obtained after interposing the value 0 by using a half-band filter and truncating which to obtain coefficients of a FIR filter;
the step of using the frequency domain filter of the channel estimation result of the data symbol to filter the OFDM channel estimation result comprises:

using the FIR filter to filter the OFDM channel estimation result.

7. A device for filtering a channel estimation result in orthogonal frequency division multiplexing (60), OFDM, **characterized by** comprising:

a frequency domain conversion module (61), adapted to convert time domain synchronous symbols to frequency domain synchronous symbols;
an impulse response module (62), adapted to calculate frequency domain impulse response sequences according to the frequency domain synchronous symbols;
an adjustment module (63), adapted to adjust minimum mean square adaptive filter coefficients according to the frequency domain impulse response sequences;
a coefficient conformation module (64), adapted to obtain a coefficient of a frequency domain filter of a channel estimation result of a data symbol according to the adjusted coefficients; and
a filter module (65), adapted to use the frequency domain filter of the channel estimation result of the data symbol to filter an OFDM;
wherein the impulse response module (62) further comprises:

an interception unit, adapted to intercept low frequency points of the frequency domain synchronous symbols according to a pre-setting number to construct a low frequency sequence;
an impulse response calculation unit, adapted to multiply the low frequency sequence by a frequency domain PN sequence whose position correspond to the low frequency sequence to obtain the frequency domain impulse response sequences
wherein low frequency is a spectrum component which is half less than the highest frequency.

8. The device according to Claim 7, **characterized in that** the frequency domain conversion module (61) comprises:

a sampling unit, adapted to sample data from the time domain synchronous symbols received by the terminal device; and
a conversion unit, adapted to perform fast Fourier transform, FFT, to a sequence constructed by the data sampled by the sampling unit to obtain the frequency domain synchronous symbols.

9. The device according to Claim 1, **characterized in that** the adjustment module (63) comprises:

an iteration calculation unit, adapted to perform iterative calculation to an output value of the minimum mean square adaptive filter corresponding to each sampling time of the frequency domain impulse response sequences sequentially; and
a coefficient unit, adapted to obtain and output the minimum mean square adaptive filter coefficients according to the iterative calculation result of the iteration calculation unit.

10. The device according to Claim 9, **characterized in that** the iteration calculation unit comprises:

an output value calculation sub-unit, adapted to calculate the output value of the minimum mean square adaptive filter;
an error calculation sub-unit, adapted to calculate an error of the output value of the minimum mean square adaptive filter;
a coefficient adjustment sub-unit, adapted to calculate the minimum mean square adaptive filter coefficients, which is calculated in the present iteration calculation and will be used in the next iteration calculation during the iteration calculation, according to the error;

a coefficient setting sub-unit, adapted to set a value of the No. $\frac{j-1}{2}$ coefficient of the minimum mean square adaptive filter coefficients, which is calculated in the present iteration calculation and will be used in the next iteration calculation during the iteration calculation, as 0.

**11.** The device according to Claim 7, **characterized in that** the coefficient conformation module (64) comprises:

an interpolation unit, adapted to interpose a value 0 after each element in a sequence output by the adjustment module (63), and then output the sequence;
a half-band filter unit, adapted to calculate the sequence output by the interpolation unit by using a half-band filter and truncate which to obtain coefficients of the frequency domain filter of the channel estimation resultof the data symbol.

**Patentansprüche**

**1.** Verfahren zum Filtern eines Kanalschätzergebnisses im orthogonalen Frequenzmultiplexverfahren (OFDM), umfassend die folgenden Schritte:

Umwandeln von Zeitdomänen-Synchronisationssymbolen, die von einem Endgerät empfangen werden, in Frequenzdomänen-Synchronisationssymbole;
Berechnen von Frequenzdomänenimpuls-Antwortsequenzen anhand der Frequenzdomänen-Synchronisationssymbole;
Anpassen von Filterkoeffizienten zur Anpassung über die kleinsten mittleren Quadrate anhand der Frequenzdomänenimpuls-Antwortsequenzen;
Erhalten eines Koeffizienten eines Frequenzdomänenfilters eines Kanalschätzergebnisses eines Datensymbols gemäß den angepassten Koeffizienten, und
Benutzen des Frequenzdomänenfilters des Kanalschätzergebnisses des Datensymbols, um ein OFDM-Kanalschätzergebnis zu filtern;
wobei der Schritt des Berechnens der Frequenzdomänenimpuls-Antwortsequenzen anhand der Frequenzdomänen-Synchronisationssymbole die folgenden Schritte umfasst:

Abfangen von Niederfrequenzpunkten der Frequenzdomänen-Synchronisationssymbole anhand einer voreingestellten Zahl, um eine Niederfrequenzsequenz zu bilden;
Multiplizieren der Niederfrequenzsequenz mit einer Frequenzdomänen-PN-Sequenz einer Position, die der Niederfrequenzsequenz entspricht, um die Frequenzdomänenimpuls-Antwortsequenzen zu erhalten;
wobei die niedrige Frequenz eine Spektralkomponente ist, die um die Hälfte niedriger als die höchste Frequenz ist.

**2.** Verfahren nach Anspruch 1, **dadurch gekennzeichnet, dass** der Schritt des Umwandeins der Zeitdomänen-Synchronisationssymbole, die von dem Endgerät empfangen werden, in Frequenzdomänen-Synchronisationssymbole die folgenden Schritte umfasst:

Abtasten von Daten der von dem Endgerät empfangenen Zeitdomänen-Synchronisationssymbole gemäß einem voreingestellten Modus, und Durchführen einer Fast-Fourier-Transformation (FFT) an einer aus den abgetasteten Daten gebildeten Sequenz, um die Frequenzdomänen-Synchronisationssymbole zu erhalten.

**3.** Verfahren nach Anspruch 1, **dadurch gekennzeichnet, dass**, der Schritt des Anpassens der Filterkoeffizienten zur Anpassung über die kleinsten mittleren Quadrate anhand der Frequenzdomänenimpuls-Antwortsequenzen die folgenden Schritte umfasst:

Durchführen einer iterativen Berechnung eines Ausgabewertes des Filters zur Anpassung über die kleinsten mittleren Quadrate, der nacheinander jeder Abtastzeit der Frequenzdomänenimpuls-Antwortsequenzen entspricht; und
wobei die Anpassung das Anpassen der Filterkoeffizienten zur Anpassung über die kleinsten mittleren Quadrate gemäß dem Ergebnis der iterativen Berechnung umfasst.

**4.** Verfahren nach Anspruch 3, **dadurch gekennzeichnet, dass** die iterative Berechnung jedes Mal die folgenden Schritte umfasst:

Berechnen des Ausgabewertes des Filters zur Anpassung über die kleinsten mittleren Quadrate;
Berechnen eines Fehlers des Ausgabewertes des Filters zur Anpassung über die kleinsten mittleren Quadrate;
Berechnen der Filterkoeffizienten zur Anpassung über die kleinsten mittleren Quadrate, die in der gegenwärtigen Iterationsberechnung berechnet und in der nächsten Iterationsberechnung während der Iterationsberechnung verwendet werden, gemäß dem Fehler, und

Setzen eines Wertes des Koeffizienten $\dfrac{j-1}{2}$ der Filterkoeffizienten zur Anpassung über die kleinsten mittleren Quadrate, der in der gegenwärtigen Iterationsberechnung berechnet und in der nächsten Iterationsberechnung während der Iterationsberechnung verwendet wird, auf 0.

**5.** Verfahren nach Anspruch 4, **dadurch gekennzeichnet, dass** der Schritt des Berechnens des Ausgabewertes des Filters zur Anpassung über die kleinsten mittleren Quadrate den Schritt des Berechnens des Ausgabewertes $\hat{n}_k$ des Filters zur Anpassung über die kleinsten mittleren Quadrate nach folgender Formel umfasst:

$$\hat{n}_k = \sum_{i=0}^{j} w_k(i) Train(k - i + 12) \, ;$$

wobei j die Anzahl der Filterkoeffizienten zur Anpassung über die kleinsten mittleren Quadrate ist;
wenn k = 0 ist, dann ist $wk(i)$ ein Einstellwert der Filterkoeffizienten zur Anpassung über die kleinsten mittleren Quadrate; Train() ist eine Trainingssequenz für die Filterkoeffizienten zur Anpassung über die kleinsten mittleren Quadrate, wobei ein Wert von Train() auf den gleichen Wert gesetzt ist wie die Frequenzdomänenimpuls-Antwortsequenzen in der entsprechenden Position; der Schritt des Berechnens des Fehlers des Ausgabewertes des Filters zur Anpassung über die kleinsten mittleren Quadrate den Schritt des Berechnens des Fehlers $e_k$ nach folgender Formel umfasst:

$$e_k = Train(k + 6) - \hat{n}_k \, ;$$

der Schritt des Berechnens der Filterkoeffizienten zur Anpassung über die kleinsten mittleren Quadrate, die in der gegenwärtigen Iterationsberechnung berechnet und in der nächsten Iterationsberechnung während der Iterationsberechnung verwendet werden, gemäß dem Fehler die Durchführung der Berechnung nach folgender Formel umfasst:

$$w_{k+1}(i) = w_k(i) + e_k Train(k - i + 12)^* \, ;$$

wobei $w_{k+1}(i)$ für die Filterkoeffizienten zur Anpassung über die kleinsten mittleren Quadrate steht, die in der nächsten Iterationsberechnung verwendet werden; *Train* ($k$-$i$+12)* für einen konjugierten Wert von *Train*($k$-$i$+12) steht; und
die angepassten Koeffizienten $w_k(i)$ umfassen, wobei ein Wert von k der Länge der Frequenzdomänenimpuls-Antwortsequenzen entspricht.

**6.** Verfahren nach Anspruch 3, **dadurch gekennzeichnet, dass** der Frequenzdomänenfilter des Kanalschätzergebnisses des Datensymbols ein Finite Impulse Response (FIR)-Filter umfasst;
der Schritt des Erhaltens der Koeffizienten des Frequenzdomänenfilters des Kanalschätzergebnisses des Datensymbols gemäß den angepassten Koeffizienten die folgenden Schritte umfasst:

Einsetzen eines Wertes 0 nach jedem Element in einer Sequenz, die durch die angepassten Koeffizienten gebildet wird;
Berechnen der Sequenz, die nach dem Einsetzen des Wertes 0 erhalten wird, durch Anwendung eines Halbbandfilters und Trunkieren desselben, um Koeffizienten eines FIR-Filters zu erhalten;
der Schritt des Benutzens des Frequenzdomänenfilters des Kanalschätzergebnisses des Datensymbols, um ein OFDM-Kanalschätzergebnis zu filtern, umfasst:

Nutzen des FIR-Filters zum Filtern des OFDM-Kanalschätzergebnisses.

7. Vorrichtung (60) zum Filtern eines Kanalschätzergebnisses im orthogonalen Frequenzmultiplexverfahren, OFDM, **dadurch gekennzeichnet, dass** sie folgendes umfasst:

ein Frequenzdomänen-Umwandlungsmodul (61), das dazu eingerichtet ist, Zeitdomänen-Synchronisationssymbole in Frequenzdomänen-Synchronisationssymbole umzuwandeln;

ein Impulsantwortmodul (62), das dazu eingerichtet ist, Frequenzdomänenimpuls-Antwortsequenzen anhand der Frequenzdomänen-Synchronisationssymbole zu berechnen;

ein Anpassungsmodul (63), das dazu eingerichtet ist, Filterkoeffizienten zur Anpassung über die kleinsten mittleren Quadrate anhand der Frequenzdomänenimpuls-Antwortsequenzen anzupassen;

ein Koeffizientenbildungsmodul (64), das dazu eingerichtet ist, einen Koeffizienten eines Frequenzdomänenfilters eines Kanalschätzergebnisses eines Datensymbols gemäß den angepassten Koeffizienten zu erhalten, und

ein Filtermodul (65), das dazu eingerichtet ist, das Frequenzdomänenfilter des Kanalschätzergebnisses des Datensymbols zu benutzen, um ein OFDM-Kanalschätzergebnis zu filtern;

wobei das Impulsantwortmodul (62) ferner umfasst:

eine Fangeinheit, die dazu eingerichtet ist, Niederfrequenzpunkte der Frequenzdomänen-Synchronisationssymbole anhand einer voreingestellten Zahl einzufangen, um eine Niederfrequenzsequenz zu bilden;

eine Impulsantwort-Rechenschaltung, die dazu eingerichtet ist, die Niederfrequenzsequenz mit einer Frequenzdomänen-PN-Sequenz einer Position, die der Niederfrequenzsequenz entspricht, zu multiplizieren, um die Frequenzdomänenimpuls-Antwortsequenzen zu erhalten;

wobei die niedrige Frequenz eine Spektralkomponente ist, die um die Hälfte niedriger als die höchste Frequenz ist.

8. Vorrichtung nach Anspruch 7, **dadurch gekennzeichnet, dass** das Frequenzdomänen-Umwandlungsmodul (61) folgendes umfasst:

eine Abtasteinheit, die dazu eingerichtet ist, Daten der von dem Endgerät empfangenen Zeitdomänen-Synchronisationssymbole abzutasten, und

eine Konversionseinheit, die dazu eingerichtet ist, eine Fast-FourierTransformation (FFT) an einer aus den abgetasteten Daten gebildeten Sequenz durchzuführen, um die Frequenzdomänen-Synchronisationssymbole zu erhalten.

9. Vorrichtung nach Anspruch 1, **dadurch gekennzeichnet, dass** das Anpassungsmodul (63) folgendes umfasst:

eine Iterationsrecheneinheit, die dazu eingerichtet ist, eine iterative Berechnung an einem Ausgabewert des Filters zur Anpassung über die kleinsten mittleren Quadrate, der nacheinander jeder Abtastzeit der Frequenzdomänenimpuls-Antwortsequenzen entspricht, durchzuführen; und

eine Koeffizienteneinheit, die dazu eingerichtet ist, die Filterkoeffizienten zur Anpassung über die kleinsten mittleren Quadrate gemäß dem Iterationsrechenergebnis der Iterationsrecheneinheit zu erhalten und auszugeben.

10. Vorrichtung nach Anspruch 9, **dadurch gekennzeichnet, dass** die Iterationsrecheneinheit folgendes umfasst:

eine Ausgabewert-Berechnungsuntereinheit, die dazu eingerichtet ist, den Ausgabewert des Filters zur Anpassung über die kleinsten mittleren Quadrate zu berechnen;

eine Fehlerberechnungsuntereinheit, die dazu eingerichtet ist, einen Fehler des Ausgabewertes des Filters zur Anpassung über die kleinsten mittleren Quadrate zu berechnen;

eine Koeffizientenanpassungsuntereinheit, die dazu eingerichtet ist, die Filterkoeffizienten zur Anpassung über die kleinsten mittleren Quadrate, die in der gegenwärtigen Iterationsberechnung berechnet und in der nächsten Iterationsberechnung während der Iterationsberechnung verwendet werden, gemäß dem Fehler zu berechnen;

eine Koeffizienteneinstelluntereinheit, die dazu eingerichtet ist, einen Wert des Koeffizienten $\frac{j-1}{2}$ der Filterkoeffizienten zur Anpassung über die kleinsten mittleren Quadrate, der in der gegenwärtigen Iterationsberechnung berechnet und in der nächsten Iterationsberechnung während der Iterationsberechnung verwendet wird, auf 0 zu setzen.

**11.** Vorrichtung nach Anspruch 7, **dadurch gekennzeichnet, dass** das Koeffizientenbildungsmodul (64) folgendes umfasst:

eine Interpolationseinheit, die dazu eingerichtet ist, einen Wert 0 nach jedem Element in einer Sequenz, die vom Anpassungsmodul (63) ausgegeben wird, zu setzen und dann die Sequenz auszugeben;
eine Halbbandfiltereinheit, die dazu eingerichtet ist, die von der Interpolationseinheit ausgegebene Sequenz durch Nutzung eines Halbbandfilters und Trunkieren desselben zu berechnen, um Koeffizienten des Frequenzdomänenfilters des Kanalschätzergebnisses des Datensymbols zu erhalten.

## Revendications

**1.** Un procédé pour filtrer un résultat d'évaluation de canal en multiplexage par répartition orthogonale de la fréquence, OFDM, comprenant les étapes suivantes :

Conversion des symboles synchrones à réponse temporelle reçus par un dispositif terminal en symboles synchrones à domaine fréquentiel ;
Calcul des séquences de réponse d'impulsion à domaine fréquentiel selon les symboles synchrones à domaine fréquentiel ;
Ajustement des coefficients de filtre adaptatif de carré moyen minimum selon les séquences de réponse d'impulsion à domaine fréquentiel ;
Obtention d'un coefficient d'un filtre de domaine de fréquence d'un résultat d'évaluation d'un canal d'un symbole de données selon les coefficients ajustés ; et
Utilisation du filtre à domaine fréquentiel du résultat d'estimation du canal du symbole de données pour filtrer un résultat d'estimation de canal OFDM ;
Où l'étape de calcul des séquences de réponse d'impulsion à domaine fréquentiel selon les symboles synchrones à domaine fréquentiel comprend les étapes suivantes :

L'interception des points de basse fréquence des symboles synchrones à domaine fréquentiel selon un nombre prédéfini pour construire une séquence de basse fréquence :

La multiplication de la séquence de basse séquence par une séquence PN de domaine fréquentiel de position correspondant à la séquence de basse fréquence pour obtenir les séquences de réponse d'impulsion à domaine fréquentiel ;
Où une basse fréquence est un composant de spectre qui est à moitié inférieur à la plus haute fréquence.

**2.** Le procédé selon la revendication 1, **caractérisé en ce que** l'étape de conversion des symboles synchrones à réponse temporelle reçus par le dispositif terminal en symboles synchrones à domaine fréquentiel comprend les étapes suivantes :

l'échantillonnage des données des symboles synchrones à réponse temporelle reçus par le dispositif terminal selon un mode de prédéfinition ; et
la réalisation d'une transformée de Fourier rapide, FFT, en une séquence construite par les données échantillonnées pour obtenir les symboles synchrones à domaine fréquentiel.

**3.** Le procédé selon la revendication 1, **caractérisé en ce que** l'étape d'ajustement des coefficients de filtre adaptatif de carré moyen minimum selon les séquences de réponse d'impulsion à domaine fréquentiel comprend les étapes suivantes :

Réalisation d'un calcul itératif vers une valeur de sortie du filtre adaptatif de carré moyen minimum correspondant à chaque temps d'échantillonnage des séquences de réponse d'impulsion à domaine fréquentiel, de manière séquentielle ; et

L'ajustement comprenant un ajustement des coefficients de filtre adaptatif de carré moyen minimum selon le résultat du calcul itératif.

4. Le procédé selon la revendication 3, **caractérisé en ce que** chaque temps du calcul itératif comprend les étapes suivantes :

Calcul de la valeur de sortie du filtre adaptatif de carré moyen minimum ;

Calcul d'une erreur de la valeur de sortie du filtre adaptatif de carré moyen minimum ;

Calcul des coefficients de filtre adaptatif de carré moyen minimum, qui sont calculés dans ce calcul d'itération et qui seront utilisés dans le prochain calcul d'itération pendant le calcul d'itération, selon l'erreur ; et

La définition d'une valeur du coefficient n° $\dfrac{j-1}{2}$ des coefficients de filtre adaptatif de carré moyen minimum, qui sont calculés dans ce calcul d'itération et qui seront utilisés dans le prochain calcul d'itération pendant le calcul d'itération, comme 0.

5. Le procédé selon la revendication 4, **caractérisé en ce que**,

L'étape de calcul de la valeur de sortie du filtre adaptatif de carré moyen minimum comprend l'étape de calcul de la valeur de sortie $\hat{n}_k$ du filtre adaptatif de carré moyen minimum selon la formule suivante :

$$\hat{n}_k = \sum_{i=0}^{j} w_k(i)\,Train(k-i+12)\,;$$

Où, le j est le nombre de coefficients de filtre adaptatif de carré moyen minimum ; lorsque k=0, $w_k(i)$ est une valeur de configuration des coefficients de filtre adaptatif de carré moyen minimum, Train() est une séquence de formation des coefficients de filtre adaptatif de carré moyen minimum, une valeur de Train() est configurée de la même façon avec une valeur des séquences de réponse d'impulsion à domaine fréquentiel dans la position correspondante ;

L'étape de calcul de l'erreur de la valeur de sortie du filtre adaptatif de carré moyen minimum comprend l'étape de calcul de l'erreur $e_k$ selon la formule suivante :

$$e_k = Train(k+6) - \hat{n}_k\,;$$

L'étape de calcul des coefficients de filtre adaptatif de carré moyen minimum, qui est calculée dans ce calcul d'itération et sera utilisée dans le prochain calcul d'itération, selon l'erreur comprend la réalisation du calcul à l'aide de la formule suivante :

$$w_{k+1}(i) = w_k(i) + e_k\,Train(k-i+12)^{*}\,;$$

Où $W_{k+1}(i)$ est les coefficients de filtre adaptatif de carré moyen minimum utilisés dans le prochain calcul d'itération ; *Train*(k-*i*+12)* représente une valeur conjuguée de *Train*(k-*i*+12) ; et

Les coefficients ajustés comprennent le $W_k(i)$, où une valeur de k est égale à la longueur des séquence à réponse d'impulsion à domaine fréquentiel.

6. Le procédé selon la revendication 3, **caractérisé en ce que** le filtre à domaine fréquentiel du résultat d'estimation de canal du symbole de données comprend un filtre de réponse à impulsion finie, FIR ;

L'étape d'obtention des coefficients de filtre à domaine fréquentiel du résultat d'estimation du canal du symbole de données selon les coefficients ajustés,

comprend les étapes suivantes :

Interposition d'une valeur 0 après chaque élément dans une séquence construite par les coefficients ajustés ;

Calcul de la séquence obtenue après interposition de la valeur 0 en utilisant un filtre à demi-bande et en tronquant celui pour obtenir des coefficients d'un filtre FIR ;

L'étape d'utilisation du filtre à domaine fréquentiel du résultat d'estimation du canal du symbole de données pour filtrer le résultat d'estimation du canal OFDM comprend :

L'utilisation du filtre FIR pour filtrer le résultat d'estimation du canal OFDM.

**7.** Un procédé de filtrage d'un résultat d'estimation de canal en multiplexage par répartition orthogonale de la fréquence (60), OFDM, **caractérisé par** le fait de comprendre :

Un module de conversion de domaine fréquentiel (61), adapté pour convertir les symboles synchrones à domaine temporel en symboles synchrones à domaine fréquentiel ;
Un module de réponse à impulsion (62), adapté pour calculer des séquences de réponse à impulsion à domaine fréquentiel selon les symboles synchrones à domaine fréquentiel ;
Un module d'ajustement (63), adapté pour ajuster des coefficients de filtre adaptatif de carré moyen minimum selon les séquences de réponse à impulsion à domaine fréquentiel ;
Un module de conformation de coefficient (64), adapté pour obtenir un coefficient d'un filtre à domaine fréquentiel d'un résultat d'estimation de canal d'un symbole de données selon les coefficients ajustés ; et
Un module de filtre (65), adapté pour utiliser le filtre à domaine fréquentiel du résultat d'estimation de canal du symbole de données pour filtrer un OFDM ;
Où le module de réponse à impulsion (2) comprend de plus :

Une unité d'interception, adaptée pour intercepter des points de basse fréquence des symboles synchrones à domaine fréquentiel selon un nombre prédéfini pour construire une séquence de basse fréquence ;
Une unité de calcul de réponse d'impulsion, adaptée pour multiplier la séquence basse fréquence par une séquence PN à domaine fréquentiel dont la position correspond à la séquence basse fréquence pour obtenir les séquences de réponse d'impulsion à domaine fréquentiel
Où la basse fréquence est un composant du spectre qui est à moitié inférieur à la plus haute fréquence.

**8.** Le dispositif selon la revendication 7, **caractérisé en ce que** le module de conversion à domaine fréquentiel (61) comprend :

Une unité d'échantillonnage, adaptée pour échantillonner des données des symboles synchrones à domaine temporel reçues par le dispositif terminal ; et
Une unité de conversion, adaptée pour réaliser une transformée de Fourier rapide, FFT, sur une séquence construite par les données échantillonnées par l'unité d'échantillonnage pour obtenir les symboles synchrones à domaine fréquentiel.

**9.** Le dispositif selon la revendication 1, **caractérisé en ce que** le module d'ajustement (63) comprend :

Une unité de calcul d'itération, adaptée pour réaliser un calcul itératif sur une valeur de sortie du filtre adaptatif de carré moyen minimum correspondant à chaque temps d'échantillonnage des séquences de réponse d'impulsion à domaine fréquentiel, de façon séquentielle ; et
Une unité de coefficient, adaptée pour obtenir et faire sortir les coefficients de filtre adaptatif de carré moyen minimum selon le résultat du calcul itératif de l'unité de calcul d'itération.

**10.** Le dispositif selon la revendication 9, **caractérisé en ce que** l'unité de calcul d'itération comprend :

Une sous-unité de calcul de valeur de sortie, adaptée pour calculer la valeur de sortie du filtre adaptatif de carré moyen minimum ;
Une sous-unité de calcul d'erreur, adaptée pour calculer une erreur de la valeur de sortie du filtre adaptatif de carré moyen minimum ;
Une sous-unité d'ajustement de coefficient, adaptée pour calculer les coefficients de filtre adaptatif de carré moyen minimum, qui sont calculés dans ce calcul d'itération et qui seront utilisés dans le prochain calcul d'itération pendant le calcul d'itération, selon l'erreur ;

Une sous-unité de configuration de coefficient, adaptée pour définir une valeur du n° de coefficient $\dfrac{j-1}{2}$ des coefficients de filtre adaptatif de carré moyen minimum, qui sont calculés dans ce calcul d'itération et qui seront utilisés dans le prochain calcul d'itération pendant le calcul d'itération, comme 0.

**11.** Le dispositif selon la revendication 7, **caractérisé en ce que** le module de conformation de coefficient (64) comprend :

Une unité d'interpolation, adaptée pour interposer une valeur 0 après chaque élément dans une sortie de séquence par le module d'ajustement (63), puis pour faire sortir la séquence ;
Une unité de filtre à demi-bande, adaptée pour calculer la sortie de séquence par l'unité d'interpolation en utilisant un filtre demi-bande et la tronquer pour obtenir des coefficients du filtre à domaine fréquentiel du résultat d'estimation de canal du symbole de données.

continuous pilot frequency    scattered pilot frequency    data

**Fig. 1**

time domain synchronous symbols received by a terminal device are converted to frequency domain synchronous symbols — 21

frequency domain impulse response sequences are calculated according to the frequency domain synchronous symbols — 22

minimum mean square adaptive filter coefficients are adjusted according to the frequency domain impulse response sequences — 23

a coefficient of a frequency domain filter of a channel estimation result of a data symbol is obtained according to the adjusted coefficients obtained in step 23 — 24

an OFDM channel estimation result is filtered by using the frequency domain filter of the channel estimation result of the data symbol — 25

**Fig. 2**

1024 point  1024 point

Sync(0:2047)

**Fig. 3**

**Fig. 4**

| | |
|---|---|
| the output value of the minimum mean square adaptive filter is calculated | 51 |
| an error $e_k$ of the output value of the minimum mean square adaptive filter is calculated | 52 |
| the minimum mean square adaptive filter coefficients corresponding to the next sampling time are calculated | 53 |
| the coefficients of the center tap filter are reset | 54 |

k+1>255? — 55

no

yes

the $W_{256}(i)$ is taken as an adjustment result of the minimum mean square adaptive filter coefficients — 56

step 24 is executed

**Fig. 5**

60

the filter device

61

the frequency domain
conversion module

62

the impulse
response module

63

the adjustment
module

64

the coefficient
conformation module

65

the filter module

## Fig. 6

$10^0$

$10^1$

$10^2$

BER

$10^3$

$10^4$

$10^5$

$10^6$

the embodiment of the
present invention
frequency domain linear
interpolation
constant coefficient filter

1    2    3    4    5    6    7    8

SNR(dB)

## Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006203932 A1
- US 2006251198 A1
- GB 2449554 A
- US 2003165131 A1